# EUROPEAN PATENT SPECIFICATION

(11) **EP 2 698 768 B1**
(45) Date of publication and mention of the grant of the patent: **27.05.2015**
(21) Application number: 13180656.4
(22) Date of filing: 16.08.2013
(51) Int. Cl.: G06T 15/00, G06T 15/06

(54) **Method and apparatus for graphic processing using parallel pipeline**
Verfahren und Vorrichtung zur grafischen Verarbeitung mittels Parallel-Pipeline
Procédé et appareil pour le traitement graphique à l'aide d'architecture pipeline parallèle

(30) Priority: 16.08.2012 KR 20120089682
(43) Date of publication of application: 19.02.2014
(73) Proprietor: Samsung Electronics Co., Ltd, Gyeonggi-do 443-742 (KR); Kongju National University Industry Academia Cooperation Group, Gongju-si, Chungcheongnam-do, 314-701 (KR)
(72) Inventor: Lee, Won Jong, 446-712 Gyeonggi-do (KR); Shin, Young Sam, 446-712 Gyeonggi-do (KR); Lee, Jae Don, 446-712 Gyeonggi-do (KR); Kim, Jin Woo, 120-749 Seoul (KR); Park, Hun Sang, 314-701 Chungcheongnam-do (KR)
(74) Representative: Grünecker Patent- und Rechtsanwälte PartG mbB

(56) References cited:
- EP-A2- 2 437 217
- Nah, J.-H. et al.: "T&I Engine: Traversal and Intersection Engine for Hardware Accelerated Ray Tracing", ACM Transactions on Graphics, vol. 30, no. 6, 160, December 2011 (2011-12), pages 1-10, XP002720896, Retrieved from the Internet: URL:http://delivery.acm.org/10.1145/203000 0/2024194/a160-nah.pdf?ip=145.64.134.241&i d=2024194&acc=ACTIVE%20SERVICE&key=986B26D 8D17D60C88D75A192E3112143&CFID=413781074&C FTOKEN=57651003&__acm__=1393251117_9a8eb34 db99af9036593b9dcd173802b [retrieved on 2014-02-24]
- Lee, W.-J., et al: "SGRT: A Scalable Mobile GPU Architecture based on Ray Tracing", SIGGRAPH 2012, 5 August 2012 (2012-08-05), pages 1-1, XP002720897, Los Angeles, California Retrieved from the Internet: URL:http://web.yonsei.ac.kr/wjlee/document /wjLee_SIGGRAPH02.pdf [retrieved on 2014-02-24]

## Description

### BACKGROUND

### 1. Field

Exemplary embodiments disclosed herein relate to a method and apparatus for graphic processing, and more particularly, to a method and apparatus for ray tracing.

### 2. Description of the Related Art

Three-dimensional (3D) rendering refers to a process for processing data of a 3D object into an image viewed from a given viewpoint of a camera.

Among rendering techniques, rasterization generates an image by displaying a 3D object into a scene. Ray tracing generates an image by tracing a path of incident light of which a ray is emitted from a viewpoint of a camera to each pixel of the image.

Ray tracing has an advantage of generating a high-quality image using physical properties of light, such as, for example, reflection, refraction, projection, and the like. However, ray tracing has a disadvantage in that it is difficul to achieve high-speed rendering due to a great amount of elementary operations.

Acceleration structure (AS) traversal (TRV) and a ray-primitive intersection test (IST) are operations which are dominant factors for determining the performance of ray tracing. The AS TRV and the ray-primitive IST are operations executed for each ray iteratively several times to several tens of times.

The AS is based on space partitioning. In detail, the AS refers to a data structure represented by partitioning scene objects to be rendered spatially, for example, a grid, a kd-tree, a bounding volume hierarchy (BVH), and the like.

The AS TRV and the ray-primitive IST utilize 70% of elementary operations or more and consume 90% or more of a memory bandwidth in ray tracing. That is, the AS TRV and ray-primitive IST operations are computationally expensive, and further consume relatively large amounts of power. For real-time implementation, a dedicated hardware is used.

The article "T&I Engine: Traversal and Intersection Engine for Hardware Accelerated Ray Tracing" by Nah, J.-H. et al. (ACM Transactions on Graphics, Vol. 30, No. 6, 160, Dec. 2011, pp. 1-10) teaches the use of dedicated hardware for real-time distributed ray tracing, wherein a specific traversal architecture is envisioned which makes use of a cache-efficient layout with parent-child locality (ODFL - ordered depth-first layout) to reduce memory traffic.

### SUMMARY

The foregoing and/or other aspects may be achieved by providing a traversal (TRV) unit using a tree acceleration structure (AS), the TRV unit including a plurality of sub-pipeline units configured or adapted to perform different operations required for ray TRV using the tree AS and which may operate in parallel.

The plurality of sub-pipeline units may be configured or adapted to perform TRV for different rays in parallel.

The plurality of sub-pipeline units may include a first sub-pipeline unit configured or adapted to fetch data associated with a node of the tree AS visited by a ray, a second sub-pipeline unit configured or adapted to test an intersection between the ray and a space of the node using the data associated with the ray and data associated with the node, and a third sub-pipeline unit configured or adapted to execute a stack operation for the data associated with the node.

The TRV unit may further include a cache configured or adapted to provide the data associated with the node to the first sub-pipeline unit.

At least one of the first sub-pipeline unit, the second sub-pipeline unit, and the third sub-pipeline unit may be plural.

A number of the first sub-pipeline units, a number of the second sub-pipeline units, and a number of the third sub-pipeline units may be determined based on a number of times that use of the first sub-pipeline unit, the second sub-pipeline unit, and the third sub-pipeline unit is required for the TRV unit to perform TRV for the rays.

Accordingly, by replicating one sub-pipeline unit, a load imbalance between the plurality of sub-pipeline units may be avoided and throughput may be improved.

The TRV unit may further include a first cross bar configured or adapted to distribute data associated with an input ray to a sub-pipeline unit corresponding to a state of the input ray among the plurality of sub-pipeline units.

The TRV unit may further include a plurality of input buffers.

The plurality of input buffers may be configured or adapted to store data associated with at least one ray distributed to one sub-pipeline unit among the plurality of sub-pipeline units.

Accordingly, the plurality of sub-pipeline units may enable parallel execution. Based on characteristics of the ray TRV algorithm, the state of the ray may be unchanged until the ray data to be processed by a predetermined sub-pipeline unit is exhausted. Accordingly, parallelism between the plurality of sub-pipeline units may be maintained continually.

The TRV unit may further include a second cross bar configured or adapted to re-transmit data associated with a ray output from one sub-pipeline unit among the plurality of sub-pipeline units to the one sub-pipeline unit, or to a shading unit or an intersection test (IST) unit, based on a state of the ray.

The TRV unit may further include a first output buffer configured or adapted to store data associated with at least one ray being output from the second cross bar and transmitted to the shading unit, and a second output buffer configured or adapted to store data associated with at least one ray being output from the second cross bar and transmitted to the IST unit.

The foregoing and/or other aspects may be achieved by providing a graphics processing unit (GPU) using a tree AS, the GPU including at least one TRV unit and at least one IST unit, the at least one IST unit may be configured or adapted to test an intersection between a scene object and a ray using the tree AS, the at least one TRV unit may include a plurality of sub-pipeline units, and the plurality of sub-pipeline units may be configured or adapted to perform different operations required for ray TRV using the tree AS and to operate in parallel.

According to the foregoing aspects, ray tracing performance of a GPU may be improved. Due to the use of a sub-pipeline unit only being required for ray TRV based on a state of a ray, power consumption may be reduced. Since rays are issued to a plurality of sub-pipeline units simultaneously, parallel processing efficiency may be improved relative to other methods (e.g., ray TRV using a single pipeline).

The foregoing and/or other aspects are achieved by providing a TRV method using a tree AS, the method including fetching, by a first sub-pipeline unit, data associated with a node of the tree AS visited by a ray, testing, by a second sub-pipeline unit, an intersection between the ray and a space of the node using data associated with the ray and the data associated with the node, and executing, by a third sub-pipeline unit, a stack operation for the data associated with the node, wherein the fetching, the testing, and the executing may perform TRV for different rays in parallel.

The TRV method may further include providing, by a cache, the data associated with the node of the first sub-pipeline unit.

At least one of the first sub-pipeline unit, the second sub-pipeline unit, and the third sub-pipeline unit may be plural.

A number of the first sub-pipeline units, a number of the second sub-pipeline units, and a number of the third sub-pipeline units may be determined based on a number of times that use of the first sub-pipeline unit, the second sub-pipeline unit, and the third sub-pipeline unit is required for a TRV unit to perform TRV for the rays.

The TRV method may further include distributing, by a first cross bar, data associated with an input ray to a sub-pipeline unit corresponding to a state of the input ray among the plurality of sub-pipeline units.

The TRV method may further include re-transmitting, by a second cross bar, data associated with a ray output from one sub-pipeline unit among the first sub-pipeline unit, the second sub-pipeline unit, and the third sub-pipeline unit, to the one sub-pipeline unit or to a shading unit or an intersection test (IST) unit, based on a state of the ray.

The TRV method may further include storing, by a first output buffer, data associated with at least one ray being output from the second cross bar and transmitted to the shading unit, and storing, by a second output buffer, data associated with at least one ray being output from the second cross bar and transmitted to the IST unit.

The foregoing and/or other aspects may be achieved by providing a ray tracing unit to perform ray tracing, the ray tracing unit including: a plurality of traversal units, each comprising a plurality of sub-pipeline units which operate in parallel, and a plurality of intersection test units to test an intersection between a ray output from at least one of the plurality of traversal units and a scene object corresponding to a leaf node of a tree acceleration structure.

The ray tracing unit may further include a ray dispatch unit to distribute an input ray to at least one traversal unit, a ray mediation unit to mediate ray transmission between the plurality of ray traversal units and the plurality of intersection test units by controlling a ray data flow, and a buffer to store at least one ray upon completion of a traversal by at least one traversal unit.

The ray tracing unit may further include a ray generation unit to generate a ray and provide data of the generated ray to the ray dispatch unit, and a shading unit to receive a traced ray from the buffer and to shade the traced ray using data of the traced ray.

A cache of a traversal unit may receive tree acceleration structure data associated with the ray tracing from a first cache of an external memory, and a cache of an intersection test unit may receive geometry data associated with the ray tracing from a second cache of the external memory.

The plurality of sub-pipeline units in a traversal unit may perform different traversal operations for different rays in parallel. For example, a first sub-pipeline unit may perform a first traversal operation by obtaining data associated with a node visited by a first ray in a tree acceleration structure, a second sub-pipeline unit may perform a second traversal operation by testing an intersection between a second ray and a space of a node corresponding to the second ray, and a third sub-pipeline unit may perform a third traversal operation by executing a stack operation for data associated with a node corresponding to a third ray. The first, second, and third sub-pipeline units may simultaneously perform the first, second and third traversal operations, respectively.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects will become apparent and more readily appreciated from the following description of embodiments, taken in conjunction with the accompanying drawings of which:
FIG. 1 illustrates an example of ray tracing;
FIG. 2 illustrates an example of a graphics processing unit (GPU) and entities related to the GPU;
FIGS. 3 through 6 illustrate examples of issues that may occur in ray traversal (TRV) using a single pipeline;

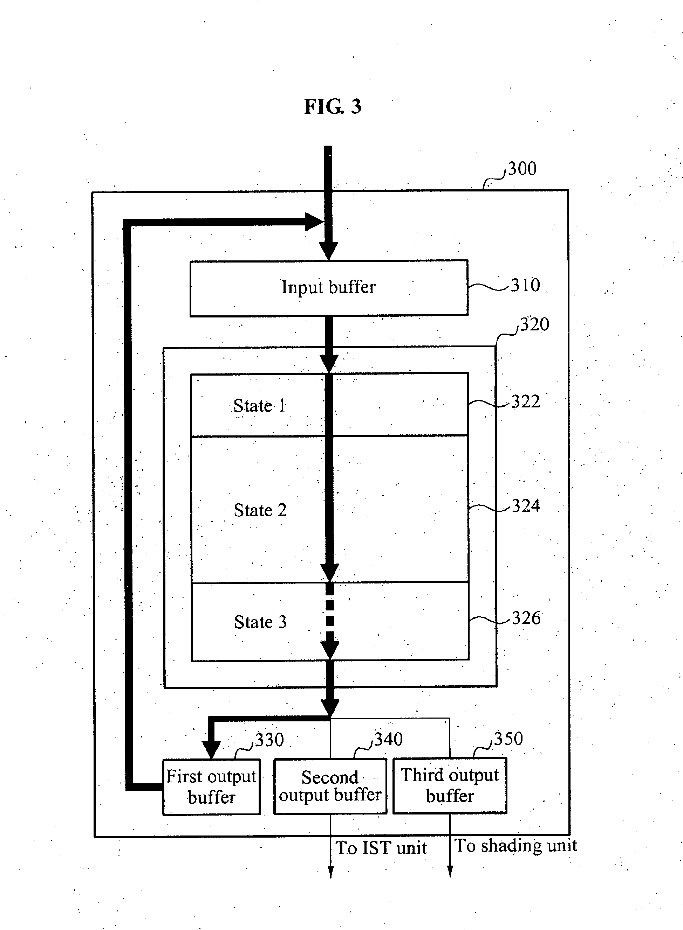

FIG. 3 illustrates an example of bypass in a pipeline according to exemplary embodiments;

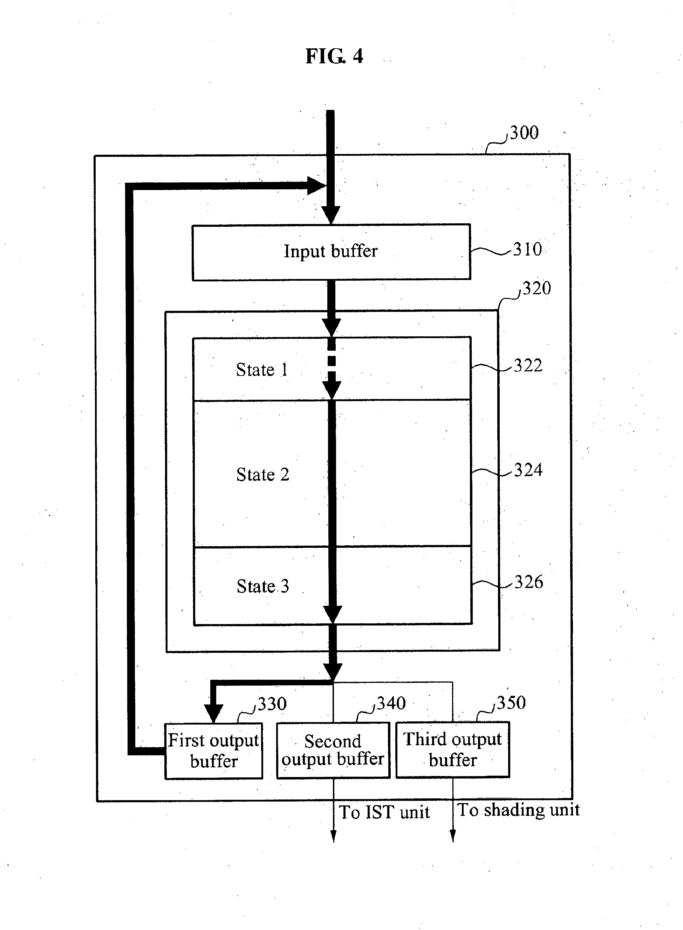

FIG. 4 illustrates an example of bypass in a pipeline according to exemplary embodiments;

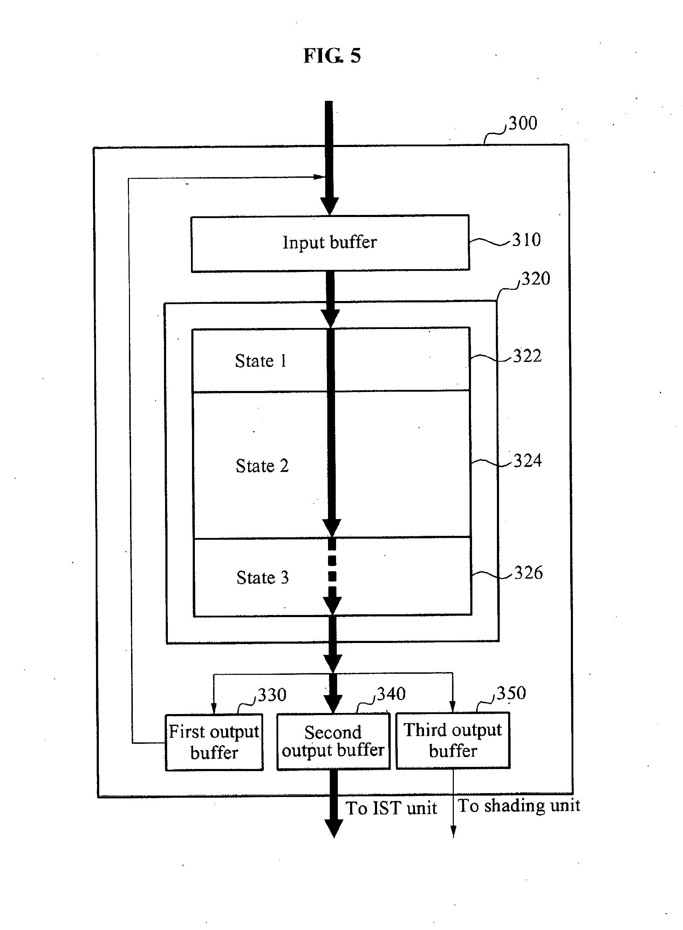

FIG. 5 illustrates an example of bypass in a pipeline according to exemplary embodiments;

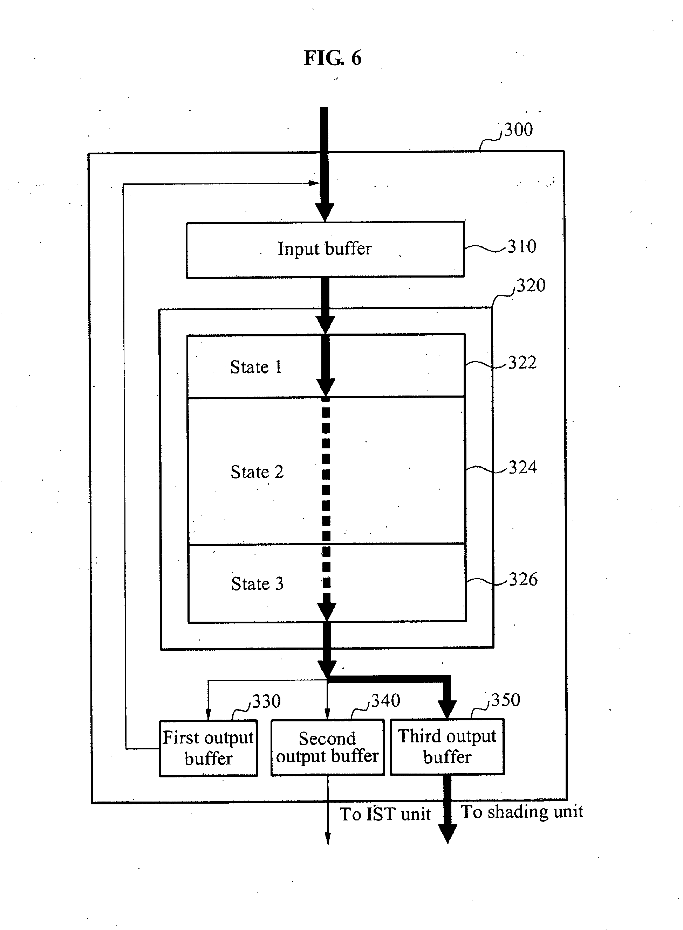

FIG. 6 illustrates an example of bypass in a pipeline according to exemplary embodiments;

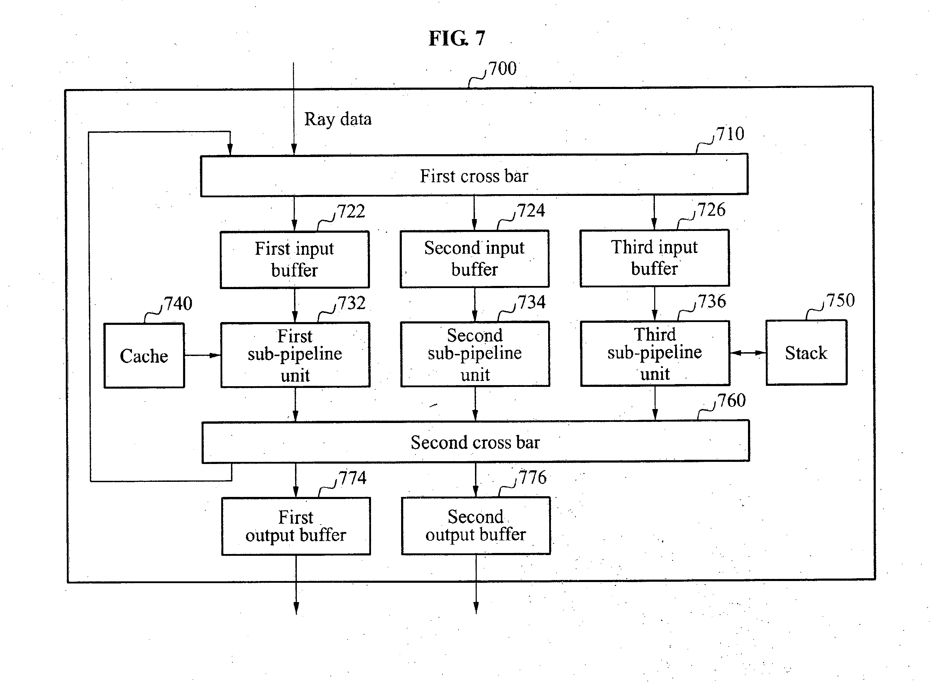

FIG. 7 illustrates an example of a TRV unit;

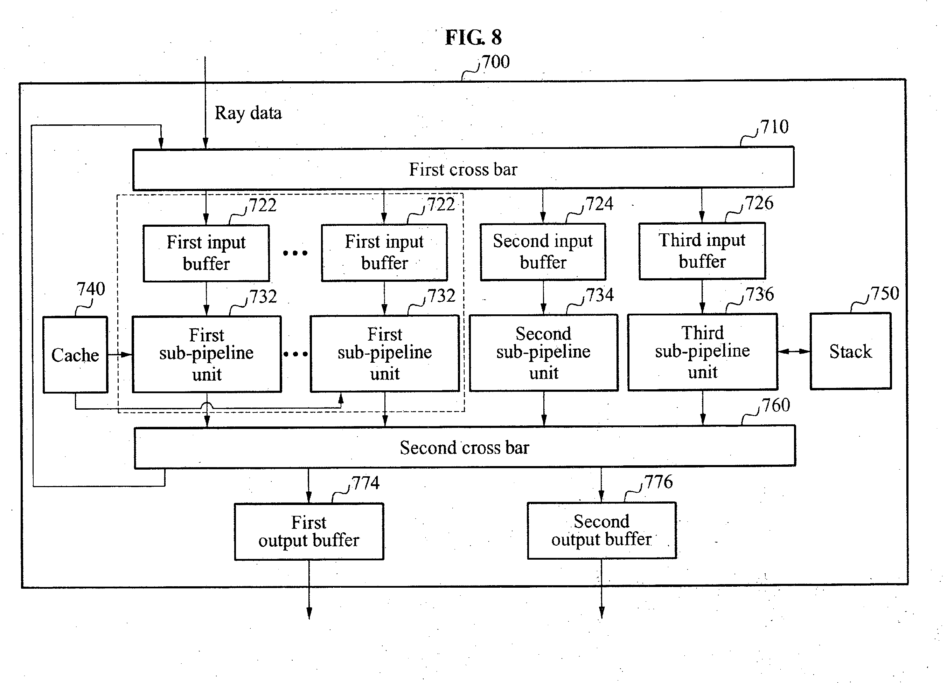

FIG. 8 illustrates an example of a TRV unit including a plurality of first sub-pipeline units;

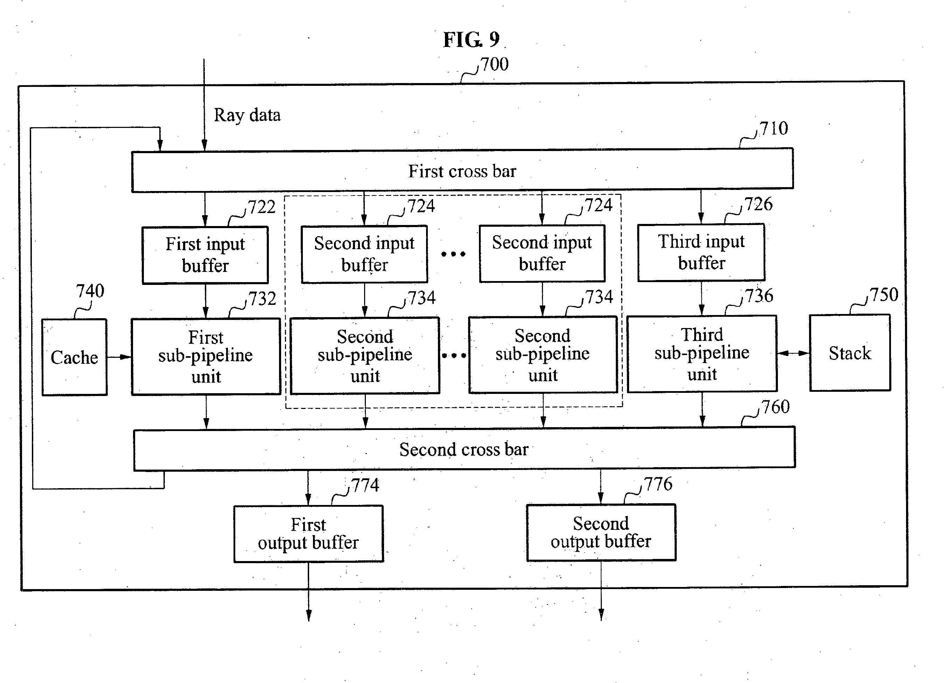

FIG. 9 illustrates an example of a TRV unit including a plurality of second sub-pipeline units;

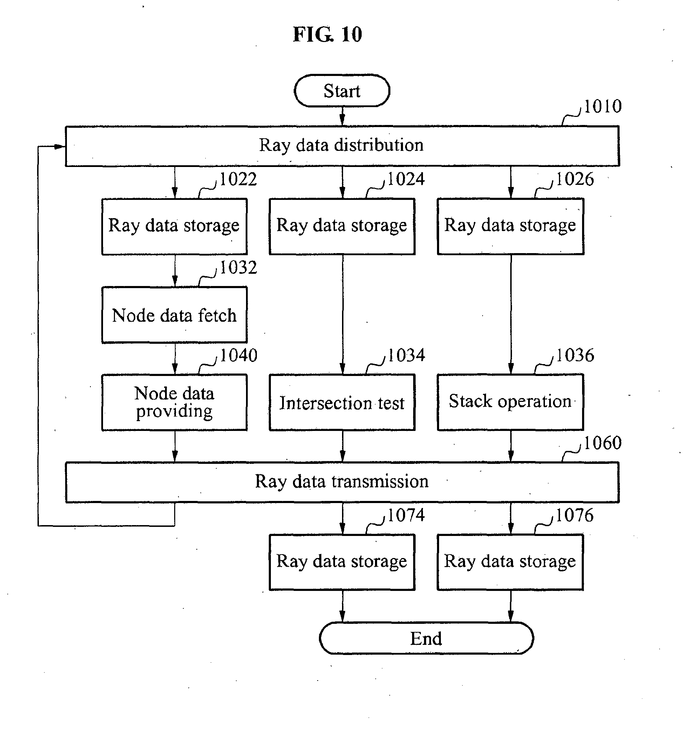

FIG. 10 illustrates an example of a ray TRV method; and

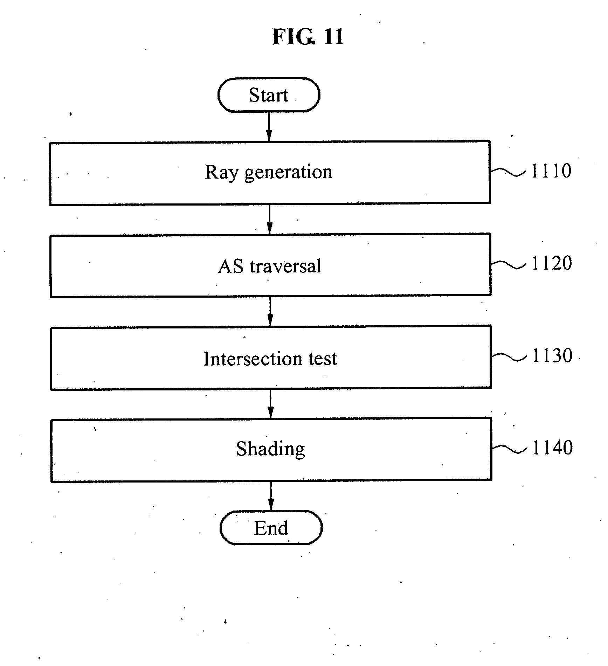

FIG. 11 illustrates an example of a ray tracing method.

### DETAILED DESCRIPTION

Reference will now be made in detail to embodiments, examples of which are illustrated in the accompanying drawings, wherein like reference numerals refer to like elements throughout. Embodiments are described below to explain the present disclosure by referring to the figures.

The term "ray" as used herein may include a ray object for ray tracing, a data structure representing a ray, information of a ray, and data associated with a ray, and these may be used interchangeably.

The term "shading unit" used in the description may also be referred to as a "shader".

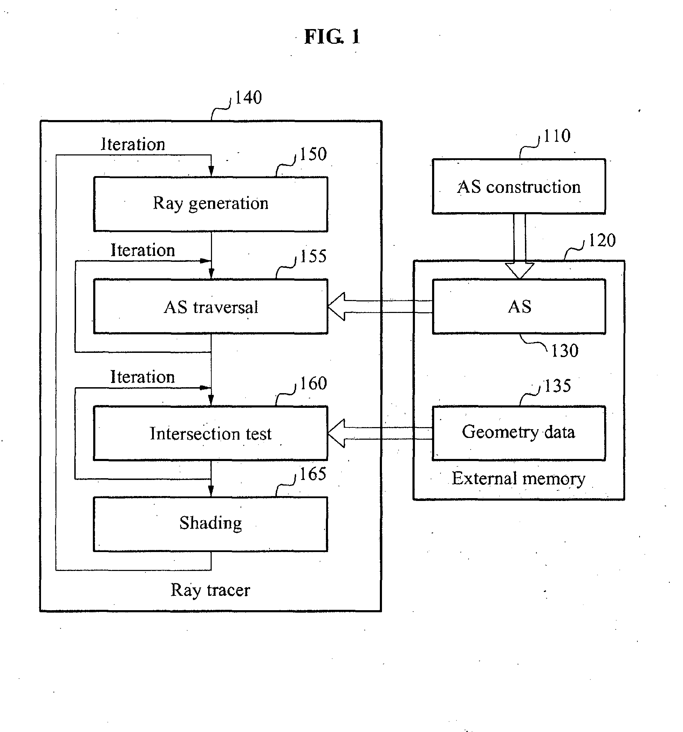

FIG. 1 illustrates an example of ray tracing.

Referring to FIG. 1, an acceleration structure (AS) construction 110 represents an operation or process of constructing an AS 130 in an electronic device. The electronic device may be embodied as a computer, a personal computer, a portable computer, a mobile device such as a mobile phone, a smart phone, a personal media player, tablet, and the like. Generally, the electronic device may be any device which is capable of performing ray tracing according to the exemplary embodiments disclosed herein. The electronic device may include a graphics processing unit (GPU) to perform ray tracing. The AS construction 110 may correspond to pre-processing of ray tracing. The AS construction 110 may be used to generate a hierarchical tree representing a three-dimensional (3D) space. The 3D space for ray tracing may be created in a form of a hierarchical tree. As an example, the 3D space may correspond to a scene.

An external memory 120 may include, store, and provide the AS 130 and geometry data 135. The external memory may be realized for example, using a non-volatile memory device such as a read only memory (ROM), a random access memory (RAM), a programmable read only memory (PROM), an erasable programmable read only memory (EPROM), or a flash memory, a volatile memory device such as a random access memory (RAM), or a storage medium such as a hard disk or optical disk. However, the present invention is not limited thereto. Further, the external memory may provide the AS 130 and geometry data 135 over a wired or wireless network.

The AS 130 may be generated by the AS construction 110. The AS 130 may correspond to a tree AS using a tree structure. For example, the AS 130 may include a kd-tree and a bounding volume hierarchy (BVH). A kd-tree may refer to a type of space-partitioning data structure. A BVH may refer to a type of tree structure in which geometric objects may be enclosed in bounding volumes. The bounding volume may have various shapes. The AS 130 may include a grid. The AS construction 110 may be used to generate a tree structure for representing a 3D space and sub-divisions of the 3D space in the form of a hierarchical tree.

The AS 130 may correspond to a binary tree. The AS 130 may have at least one node. The at least one node of the AS 130 may include a root node, an inner node, and / or a leaf node. A type of the node may include a root node, an inner node, and/or a leaf node. The root node may be considered the inner node. Each node of the AS 130 may represent a space. The space of the node may correspond to a sub-division of the entire space. The space of the node may include a bounding box (BB) of two points and an axis-aligned bounding box (AABB). The two points may correspond to symmetric points of a hexahedron of the BB. Each surface of the hexahedron may be parallel to one of an x-axis, a y-axis, and a z-axis. For example, when the entire space has dimensions (X, Y, Z), the space of the root node of the AS 130 may include a point (0, 0, 0) and a point (X, Y, Z).

A child node of the root node or inner node may correspond to a sub-division of a space of a parent node. The sub-division may correspond to a portion of space in an x-axis, a y-axis, or a z-axis. For example, the root node may have a left child node and a right child node that may be distinguished with respect to a point on an x-axis in a space of the root node. A space may be partitioned into sub-divisions. When the space of the root node is partitioned with respect to a point x₀ on an x-axis, a space of the left child node may include a point (0, 0, 0) and a point (x₀, Y, Z) and a space of the right child node may include a point (x₀, Y, Z) and a point (X, Y, Z).

The space of the node may be partitioned based on a level of the node. For example, a child node of level 3n + 2 may correspond to a sub-division of a space of a parent node of level 3n + 1 with respect to a point on an x-axis. A child node of level 3n + 3 may correspond to a sub-division of a space of a parent node of level 3n + 2 with respect to a point on a y-axis. A child node of level 3n + 4 may correspond to a sub-division of a space of a parent node of level 3n + 3 with respect to a point on a z-axis. Here, 'n' may denote an integer of '0' or more, and a root node may correspond to a node of a first level.

As an example, geometry data 135 may correspond to data of a scene object in a 3D space. In this example, a primitive in the scene object may be in the form of a triangle and the scene object may be constructed in the form of a triangle. However, the primitive may be in other geometric or polygonal forms, for example, a plane, sphere, cone, cylinder, torus, disc, and the like. For simplicity, the exemplary embodiments disclosed herein will refer to a primitive in the form of a triangle, noting that the primitive may take other forms.

A ray tracer 140 may perform operations including ray generation 150, an intersection test (IST) 160, and shading 165.

In the operation of ray generation 150, a ray passing from a reference viewpoint to a 3D space may be generated. The ray may pass from the reference viewpoint to a predetermined pixel in a 2D screen.

The ray generation 150 may be iteratively performed for each pixel in the 2D screen. A virtual ray may be emitted from an origin to each pixel in the 2D screen.

In the operation of AS traversal (TRV) 155, a path of the ray may be traced using the AS 130. The AS TRV 155 may refer to the traversing of each node in the tree of the AS 130 through which the ray passes. Here, the ray passing through the node may refer to the ray passing through a space of the node.

In an iteration of AS TRV 155, a leaf node of the AS 130 may be reached. When the leaf node of the AS 130 is reached, at least one scene object corresponding to the reached leaf node may be specified. Here, the scene object corresponding to the leaf node may refer to a scene object located in a space of the leaf node. The scene object corresponding to the leaf node may refer to all or some of the scene objects present in the space of the leaf node, among all scene objects in a scene. Data of the leaf node may include data of a scene object corresponding to the leaf node or data of a triangle. The leaf node may include a scene object corresponding to the leaf node or a primitive (e.g., a triangle). The leaf node may indicate a scene object corresponding to the leaf node or a triangle.

As described below, the AS TRV 155 may be executed by a ray TRV unit including a plurality of sub-pipeline units. The ray TRV unit may be a shortened TRV unit.

The IST 160 may perform an intersection test for a plurality of predetermined scene objects.

As described below, the IST 160 may be executed by an IST unit.

In the operation of shading 165, a color of a predetermined pixel in the 2D screen, to which the ray is emitted, may be calculated based on a color of a visible scene object intersecting the ray.

A rendered image may be generated by determining colors of pixels in the 2D screen.

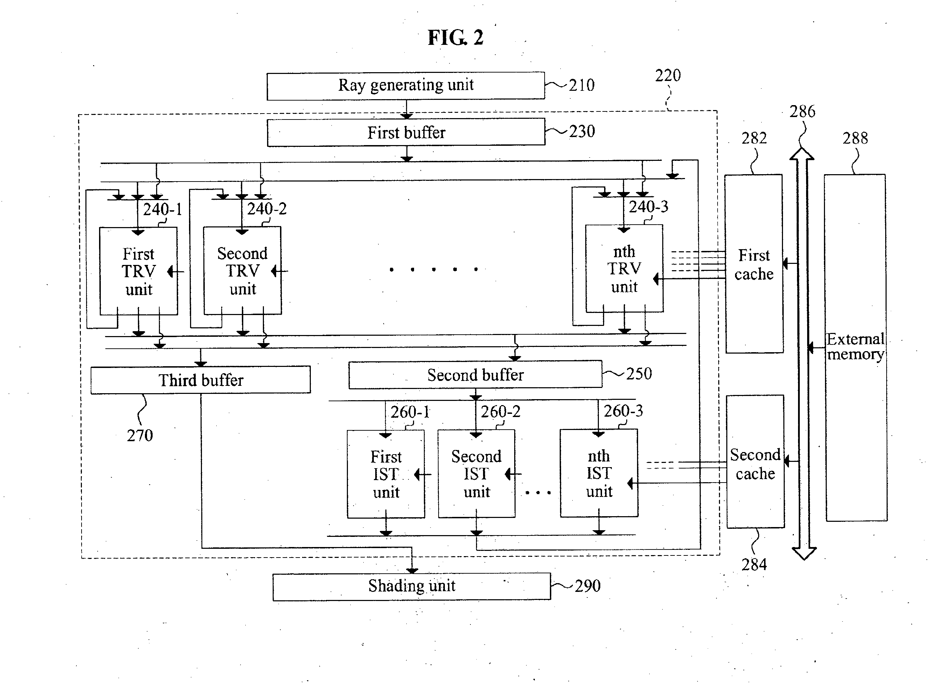

FIG. 2 illustrates an example of a graphics processing unit (GPU) and entities related to the GPU.

Referring to FIG. 2, a structure of a rendering hardware or GPU used to perform ray tracing is illustrated.

In FIG. 2, a ray generating unit 210, a ray tracing unit 220, a first cache 282, a second cache 284, a bus 286, an external memory 288, and a shading unit 290 are provided. The ray generating unit 210, the first cache 282, the second cache 284, and the shading unit 290 may be components of the GPU. The GPU may include the ray generating unit 210, the first cache 282, the second cache 284, and the shading unit 290.

The GPU or the ray tracing unit 220 may correspond to the ray tracer 140 of FIG. 1. The external memory 288 may correspond to the external memory 120 of FIG. 1. The ray generating unit 210 may perform the ray generation 150. The shading unit 290 may perform the shading 165. Although this exemplary embodiment shows that the ray generating unit 210 and the shading unit 290 are separated from the ray tracing unit 220, the ray generating unit 210 and the shading unit 290 may be included in the ray tracing unit 220. The ray generating unit 210 may generate a ray. The ray generating unit 210 may further provide data of the generated ray to the ray tracing unit 220. The ray generating unit 210 may thus represent an operation or entity for providing the data of the ray to the ray tracing unit 220.

The ray tracing unit 220 may trace the ray. The ray tracing unit 220 may provide data of the traced ray to the shading unit 290.

The shading unit 290 may shade the traced ray based on the data of the traced ray. The shading unit 290 may represent an operation or entity for shading the traced ray. The shading may correspond to determining a final color of a pixel by calculating a sum of ray tracing results for each pixel in a 2D screen.

The first cache 282 and the second cache 284 may provide or store a cache of data needed for ray tracing. The data needed for ray tracing may be stored in the external memory 288. The first cache 282 and the second cache 284 may provide or store a cache of a portion of data stored in the external memory 288. Data associated with ray tracing may be transmitted between the first cache 282 and the external memory 288 and between the second cache 284 and the external memory 288, through the bus 286. That is, there may be a wired connection between the first cache 282 and the external memory 288 and between the second cache 284 and the external memory 288. The data stored in the first cache 282 may correspond to a portion of the AS 130, and the data stored in the second cache 284 may correspond to a portion of the geometry data 135.

The first cache 282 may provide the data needed for ray tracing to a cache of a TRV unit that will be described below, and the second cache 284 may provide the data needed for IST to a cache of an IST unit that will be described below. Accordingly, the cache of the TRV unit and the cache of the IST unit may correspond to a level-1 cache, and the first cache 282 and the second cache 284 may correspond to a level-2 cache.

A detailed description of the ray tracing unit 220 is provided in the following.

The ray tracing unit 220 may include a first buffer 230, at least one TRV unit 240-1 through 240-3, a second buffer 250, at least one IST unit 260-1 through 260-3, and a third buffer 270.

The at least one TRV unit may include a first TRV unit 240-1, a second TRV unit 240-2, and an nth TRV unit 240-3. Here, 'n' may denote an integer of '1' or more. The at least one IST unit may include a first IST unit 260-1, a second IST unit 260-2, and an mth IST unit 260-3. Here, 'm' may denote an integer of '1' or more.

In FIG. 2, a ray tracing unit 220 may find a first leaf node visited by a ray, through hierarchical TRV from a root node of the AS 130 to a subclass node. When the visited leaf node is found through TRV, the ray tracing unit 220 may test an intersection between the ray and a scene object or triangle corresponding to the leaf node. Here, the scene object or triangle corresponding to the leaf node may be plural. When the triangle intersecting the ray is absent in the visited leaf node, the ray tracing unit 220 may continue the TRV over the tree to find a primitive intersecting the ray. That is, if the ray does not intersect the triangle, the ray tracing unit 220 may continue the TRV in another portion of the tree to determine whether a primitive (e.g. a scene object or triangle) intersects the ray. The TRV and the IST may be performed by the TRV unit and the IST unit, respectively. The at least one IST unit may test an intersection between the scene object and the ray using the tree AS.

Due to characteristics of ray TRV, a great amount of elementary operations and a high memory bandwidth are required. This is caused by fetching of data associated with the node and data associated with the scene object or triangle, followed by elementary operations, for each visit or IST. Accordingly, the TRV unit and the IST unit may have caches for TRV and IST, respectively. When data associated with the node, data associated with the scene object, or data associated with the primitive is absent in the cache, a long latency may occur in fetching data from the external memory 288 and the ray tracing performance may be degraded.

The first buffer 230 may control ray transmissions between the ray generating unit 210 and the plurality of TRV units. The first buffer 230 may store an input ray being input in the ray tracing unit 220, and may distribute the input ray to one TRV unit among the at least one TRV unit. The input ray may include at least one ray. The at least one input ray may be input in the ray tracing unit 220 in a sequential order. The first buffer 230 may be named or referred to as a ray dispatch unit.

The first buffer 230 may distribute the input ray to one TRV unit among the at least one TRV unit based on availability of an input buffer of the at least one TRV unit.

The ray being input in one TRV unit among the at least one TRV unit may include a ray generated by the ray generating unit 210, a ray being traversed or having been traversed by one TRV unit, and / or a ray tested for intersection by the IST unit. A ray being output from one TRV unit among the at least one TRV unit may be re-input in the corresponding TRV unit, and / or may be input in an IST unit selected by the second buffer 250 among the at least one IST unit and the shading unit 290.

The third buffer 270 may store the ray being output to the shading unit 290. The ray stored in the third buffer 270 may include at least one ray. When TRV is completed, data associated with the ray may be transmitted from the TRV unit to the shading unit 290.

The ray may be stored in the third buffer 270 before being output to the shading unit 290. That is, a plurality of rays may be output to the third buffer 270, and when TRV is completed, data associated with the plurality of rays may be output to the shading unit 290.

The second buffer 250 may mediate ray transmissions between the at least one TRV unit and the at least one IST unit. When the ray reaches the leaf node, IST for the ray may be performed. Accordingly, the ray may be output from the TRV unit, and may be input in the IST unit through the second buffer 250. The second buffer 250 may control a ray data flow between the at least one TRV unit and the at least one IST unit. The second buffer 250 may be named or referred to as a ray mediation unit.

The ray may pass through at least one space. Accordingly, after IST for the ray is completed, TRV for the ray may continue. The ray being output from one IST unit among the at least one IST unit may be input to one TRV unit among the at least one TRV unit. Here, the TRV unit, in which the ray is input, may correspond to a TRV unit that has performed the TRV for the ray.

FIGS. 3 through 6 illustrate examples of issues that may occur in ray TRV using a single pipeline.

As described in the foregoing, the TRV unit may conduct a hierarchical TRV in the tree of the AS 130. The hierarchical TRV for the tree may include fetching node data and visiting a left child, visiting a right child and executing a pop operation of a stack, fetching node data, visiting a leaf node, and outputting to an IST unit; and outputting data associated with a ray being input from the IST unit to the shading unit. Here, the fetching of the node data may correspond to fetching of the node data from the cache. The node data may correspond to data associated with a space of the node. The data associated with the space may include BB and AABB.

To improve throughput, the TRV unit may perform ray TRV using a pipeline. A new ray may be input in the input buffer of the TRV unit. To visit each node in the tree continuously, data associated with the ray may be re-input in the input buffer of the TRV unit through the output buffer of the TRV unit. The pipeline may have a plurality of states.

For example, the pipeline may have a first state, a second state, and a third state. The first state may refer to a state in which data associated with the node is fetched from the cache. The first state may refer to a state in which determination is performed as to whether the node is a leaf node or an inner node. The second state may refer to a state in which an intersection between the ray and the space of the node is tested using data associated with the ray and the node. Here, the test for intersection may correspond to testing whether the ray passes through the space of the node. The third state may refer to a state in which a stack operation for the data associated with the node is executed. The stack operation for the data associated with the node may include a push operation of pushing the data associated with a node onto a stack and a pop operation of popping the data associated with the node from the stack. The node to be in the third state may correspond to a node that the TRV unit will visit next.

In the hierarchical TRV of the tree, a transition between the states may be non-deterministic. For example, the state transition of the pipeline may be non-sequential. The state transition of the pipeline may exhibit different behaviors on different runs based on at least one of a type of a visited node, an IST result, and a current state of the pipeline.

Due to the non-deterministic transition, the ray TRV may fail at a portion of the pipeline and a bypass may be implemented in the pipeline. A further description of a bypass being implemented is provided hereinafter.

FIG. 3 illustrates an example of a bypass in the pipeline according to example embodiments.

In FIG. 3, a bold arrow indicates ray data movement, and a dotted arrow indicates ray data bypass.

Ray data input in a TRV unit 300 may be input in a pipeline 320 through an input buffer 310.

The pipeline 320 may include a plurality of sub-pipelines. The pipeline 320 may include a first sub-pipeline 322, a second sub-pipeline 324, and a third sub-pipeline 326. The first sub-pipeline 322, the second sub-pipeline 324, and the third sub-pipeline 326 may correspond to the first state, the second state, and the third state, respectively, as described in the foregoing. The first sub-pipeline 322 may correspond to a portion operating when the pipeline 320 is in the first state. The second sub-pipeline 324 may correspond to a portion operating when the pipeline 320 is in the second state. The third sub-pipeline 326 may correspond to a portion operating when the pipeline 320 is in the third state.

The first sub-pipeline 322 may fetch node data from a cache, and may determine whether a node is a leaf node or an inner node. The second sub-pipeline 324 may test an intersection between the ray and the space of the node using the ray data and the node data. The third sub-pipeline 326 may execute a stack operation for the node data.

The first sub-pipeline 322 and the second sub-pipeline 324 may execute an operation for the ray or the ray data, and the third sub-pipeline 326 may bypass the ray or the ray data.

Referring to FIG. 3, fetching node data and visiting a left child may be performed. The first sub-pipeline 322 may fetch node data. The first sub-pipeline 322 may determine whether a node is a leaf node or an inner node. When the node is determined to be the inner node, a state of the pipeline 320 may transit to the second state to test an intersection between a left child node and the ray. The second sub-pipeline 324 may test an intersection between the left child node and the ray. Next, a test for an intersection between a right child node and the ray needs to be performed. However, since the third sub-pipeline 326 connected to the second sub-pipeline 324 corresponds to the third state, the third sub-pipeline 326 may not execute operations for the ray but may transmit the ray data to a first output buffer 330.

The bypassed ray data may be re-input in the input buffer 310 through the first output buffer 330. Next, an intersection between the right child node and the ray may be tested by the pipeline 320.

The second output buffer 340 and the third output buffer 350 may not be used in the process of FIG. 3.

FIG. 4 illustrates another example of a bypass in the pipeline.

In FIG. 4, the first sub-pipeline 322 may bypass a ray or ray data, and the second sub-pipeline 324 and the third sub-pipeline 326 may execute an operation for the ray or the ray data.

Referring to FIG. 4, visiting a right child and a pop operation of a stack may be performed. Since the need to fetch node data is eliminated, the first sub-pipeline 322 may bypass the ray or the ray data. The second sub-pipeline 324 may test an intersection between a right child node and the ray. The third sub-pipeline 326 may execute an operation of a stack. The operation of the stack may refer to a pop operation of popping node data from the stack. The ray data may be re-input in the input buffer 310 through the first output buffer 330 to traverse the popped node.

The second output buffer 340 and the third output buffer 350 may not be used in the process of FIG. 4.

Since the technical disclosure of FIG. 3 may be applied here, a further detailed description is omitted herein for conciseness and simplicity.

FIG. 5 illustrates another example of a bypass in the pipeline.

In FIG. 5, the first sub-pipeline 322 and the second sub-pipeline 324 may execute an operation for a ray or ray data, and the third sub-pipeline 326 may bypass the ray or the ray data.

Referring to FIG. 5, fetching node data, visiting a leaf node, and output to an IST unit may be performed. The first sub-pipeline 322 may fetch node data. The first sub-pipeline 322 may determine whether a node is a leaf node or an inner node. When the node is determined to be a leaf node, a state of the pipeline 320 may transit to the second state to test an intersection between the node and the ray. The second sub-pipeline 324 may test an intersection between the node and the ray. When the ray intersects the node, the ray data may be transmitted to the IST unit. Since the third sub-pipeline 326 connected to the second sub-pipeline 324 corresponds to the third state, the third sub-pipeline 326 may not execute operations for the ray but may transmit the ray data to a second output buffer 340.

The first output buffer 330 and the third output buffer 350 may not be used in the process of FIG. 5.

Since the technical disclosure of FIGS. 3 and 4 may be applied here, a further detailed description is omitted herein for conciseness and simplicity.

FIG. 6 illustrates a final example of a bypass in the pipeline.

The first sub-pipeline 322 may execute an operation for a ray or ray data, and the second sub-pipeline 324 and the third sub-pipeline 326 may bypass the ray or the ray data.

Referring to FIG. 6, outputting of the input ray data to the shading unit may be performed. The first sub-pipeline 322 may fetch node data. The node data may be transmitted to the shading unit 290. Since the second sub-pipeline 324 and the third sub-pipeline 326 correspond to the second state and the third state, respectively, the second sub-pipeline 324 and the third sub-pipeline 326 may not execute operations for the ray but may transmit the ray data to a third output buffer 350.

The first output buffer 330 and the second output buffer 340 may not be used in the process of FIG. 6.

Since the technical disclosure of FIGS. 3 through 5 may be applied here, a further detailed description is omitted herein for conciseness and simplicity.

As described with reference to FIGS. 3 through 6, not all the sub-pipelines connected in the pipeline 320 may execute an operation for the ray or ray data continually. Based on state divergence, some of the sub-pipelines may bypass the ray data. That is, one or more of the sub-pipelines may not be active while one or more other sub-pipelines perform an operation. As a result, a pipeline processing rate of one-ray per one-cycle may be maintained. However, unnecessary data transmission in the pipeline 320 may reduce an effective processing rate and may increase power consumption. In this instance separation of sub-pipelines and parallel execution of separate sub-pipelines may be contemplated to improve an effective processing rate and reduce power consumption.

FIG. 7 illustrates an example of a TRV unit 700.

The TRV unit 700 may use a tree AS. The first TRV unit 240-1, the second TRV unit 240-2, and the nth TRV unit 240-3 of FIG. 2 may correspond to the TRV unit 700.

The TRV unit 700 may include a plurality of sub-pipeline units. The plurality of sub-pipeline units may perform different operations required for TRV using the tree AS. The plurality of sub-pipeline units may operate in parallel. The plurality of sub-pipeline units may perform TRV for different rays in parallel. That is, the plurality of sub-pipeline units may perform different operations on different rays, simultaneously.

The plurality of sub-pipeline units may include a first sub-pipeline unit 732, a second sub-pipeline unit 734, and a third sub-pipeline unit 736. The first sub-pipeline unit 732, the second sub-pipeline unit 734, and the third sub-pipeline unit 736 may include at least one pipeline stage.

The plurality of sub-pipeline units may correspond to a state of the pipeline. For example, the first sub-pipeline unit 732, the second sub-pipeline unit 734, and the third sub-pipeline unit 736 may correspond to the first state, the second state, and the third state of FIG. 2, respectively.

The TRV unit 700 may further include a first cross bar 710, a cache 740, a stack 750, a second cross bar 760, a first output buffer 774, and / or a second output buffer 776.

The TRV unit 700 may further include a plurality of input buffers. The plurality of input buffers may store data associated with at least one ray distributed to one sub-pipeline unit among the plurality of sub-pipeline units. The sub-pipeline units may each have a separate input buffer at an inlet. The input buffer may transmit the stored ray data to the TRV unit 700.

As a non-limiting example, the plurality of input buffers may include a first input buffer 722, a second input buffer 724, and a third input buffer 736. The first input buffer 722, the second input buffer 724, and the third input buffer 736 may transmit ray data to the first sub-pipeline unit 732, the second sub-pipeline unit 734, and the third sub-pipeline unit 736, respectively.

The plurality of input buffers, the first output buffer 774, and the second output buffer 776 may be based on a first-in first-out (FIFO) principle.

The first sub-pipeline unit 732 may fetch data associated with a visited node in the tree AS, and may determine whether the node is a leaf node or an inner node. The first sub-pipeline unit 732 may execute the operation of the first sub-pipeline 322.

The second sub-pipeline unit 734 may test an intersection between the ray and a space of the node using the ray data and the node data. The second sub-pipeline unit 734 may execute the operation of the second sub-pipeline 324.

The third sub-pipeline unit 736 may execute a stack operation for the node data. The third sub-pipeline unit 736 may execute the operation of the third sub-pipeline 326.

The cache 740 may provide the node data to the first sub-pipeline unit 732. The cache 740 may provide a cache of AS data from the first cache 282 of FIG. 2, and may store the AS data. The AS data may include data associated with each node in the AS.

The stack 750 may provide a stack operation to the third sub-pipeline unit 736. The stack 750 may store data pushed by the third sub-pipeline unit 736, and may provide data popped by the third sub-pipeline unit 736 to the third sub-pipeline unit 736. The stack 750 may be based on a last-in first-out (LIFO) principle.

The first cross bar 710 may distribute the data associated with the ray input in the TRV unit 700 to one sub-pipeline unit corresponding to a state of the input ray, among the plurality of sub-pipeline units. An operation to be executed for the input ray may be determined based on the state of the ray. For example, the ray input in the TRV unit 700 may be processed by one sub-pipeline unit among the plurality of sub-pipeline units, and the state of the ray may indicate a sub-pipeline unit to be used to process the ray.

The state of the ray may be changed by a task or an operation for processing the ray or the ray data for the plurality of sub-pipeline units.

The first cross bar 710 may correspond to a buffer for routing the ray data to an arbitrary input buffer among the plurality of input buffers.

The second cross bar 760 may re-transmit the ray data output from one sub-pipeline unit among the plurality of sub-pipeline units to the corresponding sub-pipeline unit, the shading unit 290, or the IST unit, based on the state of the ray. The ray data transmitted from the second cross bar 760 to the IST unit may be transmitted to the IST unit through the second buffer 250.

The plurality of sub-pipeline units may be connected to a feedback line through the first cross bar 710 and the second cross bar 760.

The first output buffer 774 may store data associated with at least one ray being output from the second cross bar 760 and transmitted to the shading unit 290. The data associated with the ray from the second cross bar 760 to the shading unit 290 may be transmitted to the shading unit 290 through the first output buffer 774.

The second output buffer 776 may store data associated with at least one ray being output from the second cross bar 760 and transmitted to the IST unit. The data associated with the ray from the second cross bar 760 to the IST unit may be transmitted to the IST unit through the second output buffer 776.

As to the plurality of input buffers, the ray may await being processed by the sub-pipeline unit corresponding to the respective input buffer. When a suitable number of rays are buffered in the plurality of input buffers, the rays may be issued to the plurality of sub-pipeline units simultaneously. Accordingly, the plurality of sub-pipeline units may enable parallel execution. Based on characteristics of the ray TRV algorithm, the state of the ray may be unchanged until the ray data to be processed by a predetermined sub-pipeline unit is exhausted. Accordingly, parallelism between the plurality of sub-pipeline units may be maintained continually.

At least one of the first sub-pipeline unit 732, the second sub-pipeline unit 734, and the third sub-pipeline unit 736 may be plural. A number of times that generation of a state of the ray occurs may vary. Accordingly, by replicating one sub-pipeline unit, a load imbalance between the plurality of sub-pipeline units may be avoided and throughput may be improved.

A number of the first sub-pipeline units 732, a number of the second sub-pipeline units 734, and a number of the third sub-pipeline units 736 may be determined based on a number of times that use of the first sub-pipeline unit 732, the second sub-pipeline unit 734, and the third sub-pipeline unit 736, respectively, is required for the TRV unit 700 to process the rays on an average or on another statistical basis. Alternatively, a number of the first sub-pipeline units 732, the second sub-pipeline units 734, and the third sub-pipeline units 736 may be determined based on a ratio of the number of times that use of the first sub-pipeline unit 732, the second sub-pipeline unit 734, and the third sub-pipeline unit 736 is required.

FIG. 8 illustrates an example of a TRV unit including a plurality of first sub-pipeline units.

In FIG. 8, a plurality of first input buffers 722 and a plurality of first sub-pipeline units 732 are provided. The cache 740 may provide node data to the plurality of first sub-pipeline units 732.

When a number of times of processing of ray data by the first sub-pipeline unit 732 is higher than a number of times of processing of ray data by the second sub-pipeline unit 734 and a number of times of processing of ray data by the third sub-pipeline unit 736, the TRV unit 700 may use two or more first sub-pipeline units 732. The plurality of first sub-pipeline units 732 may process data associated with a plurality of rays simultaneously. Thus, a bottleneck due to a high number of times that the first sub-pipeline unit 732 is used may be prevented at the first sub-pipeline unit 732.

FIG. 9 illustrates an example of a TRV unit including a plurality of second sub-pipeline units.

In FIG. 9, a plurality of second input buffers 724 and a plurality of second sub-pipeline units 734 are provided.

When a number of times of processing of ray data by the second sub-pipeline unit 734 is higher than a number of times of processing of ray data by the first sub-pipeline unit 732 and a number of times of processing of ray data by the third sub-pipeline unit 736, the TRV unit 700 may use two or more second sub-pipeline units 734. The plurality of second sub-pipeline units 734 may process data associated with a plurality of rays simultaneously.

Alternatively, one of ordinary skill in the art would understand the TRV unit 700 may also use two or more sub-pipeline units in a plurality of sub-pipelines (e.g., a plurality of first sub-pipeline units and a plurality of second sub-pipeline units, a plurality of second sub-pipeline units and a plurality of third sub-pipeline units, a plurality of first sub-pipeline units and a plurality of third sub-pipeline units, a plurality of first sub-pipeline units and a plurality of second sub-pipeline units and a plurality of third sub-pipeline units, etc.). The number of sub-pipeline units may vary according to a number of times of processing of ray data, an amount of time needed to process ray data, a relative ratio of use, or other statistical information which may be used to balance workload in an appropriate and/or efficient manner.

FIG. 10 illustrates an example of a ray TRV method.

. Referring to FIG. 10, in operation 1010, the first cross bar 710 may distribute data associated with a ray input in the TRV unit 700 to a sub-pipeline unit corresponding to a state of the input ray, among the first sub-pipeline unit 732, the second sub-pipeline unit 734, and the third sub-pipeline unit 736. The ray data may be output to at least one such destination sub-pipeline unit.

Operations 1022, 1024, and 1026 may be executed based on the sub-pipeline unit corresponding to the destination sub-pipeline unit among the first sub-pipeline unit 732, the second sub-pipeline unit 734, and the third sub-pipeline unit 736.

In operation 1022, the first input buffer 722 may store the data associated with the ray output from the first cross bar 710. The first input buffer 722 may store data associated with at least one ray. The first input buffer 722 may transmit the stored data associated with the at least one ray to the first sub-pipeline unit 732 based on the FIFO principle.

In operation 1032, the first sub-pipeline unit 732 may fetch data associated with a node visited by the ray in a tree AS. The first sub-pipeline unit 732 may determine whether the node is a leaf node or an inner node.

In operation 1040, the cache 740 may provide the data associated with the node to the first sub-pipeline unit 732.

After the fetching or the determining is completed, the first sub-pipeline unit 732 may output the data associated with the ray to the second cross bar 760, at operation 1060.

In operation 1024, the second input buffer 724 may store the data associated with the ray output from the first cross bar 710. The second input buffer 724 may store data associated with at least one ray. The second input buffer 724 may transmit the stored data associated with the at least one ray to the second sub-pipeline unit 734 based on the FIFO principle.

In operation 1034, the second sub-pipeline unit 734 may test an intersection between the ray and a space of the node using the data associated with the ray and the data associated with the node.

After the test is completed, the second sub-pipeline unit 734 may output the data associated with the ray to the second cross bar 760, at operation 1060.

In operation 1026, the third input buffer 726 may store the data associated with the ray output from the first cross bar 710. The third input buffer 726 may store data associated with at least one ray. The third input buffer 726 may transmit the stored data associated with the at least one ray to the third sub-pipeline unit 736 based on the FIFO principle.

In operation 1036, the third sub-pipeline unit 736 may execute a stack operation for the data associated with the node. Subsequent to the operation being executed, the third sub-pipeline unit 736 may output the data associated with the ray to the second cross bar 760, at operation 1060.

Operations 1032/1040, 1034, and 1036 may perform TRV for different rays in parallel. In operations 1032/1040, 1034, and 1036, data associated with a plurality of rays may be processed by one sub-pipeline unit among the first sub-pipeline unit 732, the second sub-pipeline unit 734, and the third sub-pipeline unit 736 in parallel.

At least one of the first sub-pipeline units 732, the second sub-pipeline units 734, and the third sub-pipeline unit 736 may be plural. A number of the first sub-pipeline units 732, a number of the second sub-pipeline units 734, and a number of the third sub-pipeline units 736 may be determined based on a number of times that use of the first sub-pipeline unit 732, the second sub-pipeline unit 734, and the third sub-pipeline unit 736 is required for the TRV unit 700 to process the rays on an average or on another statistical basis, respectively.

Subsequent to operations 1032/1040, 1034, or 1036 being executed, operation 1060 may be executed.

In operation 1060, the second cross bar 760 may re-transmit the data associated with the ray output from one sub-pipeline unit among the first sub-pipeline unit 732, the second sub-pipeline unit 734, and the third sub-pipeline unit 736, to the corresponding sub-pipeline unit, the shading unit 290, or at least one IST unit, based on the state of the ray.

When the data associated with the ray is re-transmitted to the corresponding sub-pipeline unit, operation 1010 may be executed. When the data associated with the ray is re-transmitted to the shading unit 290, operation 1074 may be executed. When the data associated with the ray is transmitted to at least one IST unit, operation 1076 may be executed.

In operation 1074, the first output buffer 774 may store data associated with at least one ray being output from the second cross bar 760 and transmitted to the shading unit 290.

The first output buffer 774 may transmit the stored data associated with the at least one ray to the shading unit 290 based on the FIFO principle.

In operation 1076, the second output buffer 776 may store the data associated with the at least one ray being output from the second cross bar 760 and transmitted to one IST unit among the at least one IST unit.

The second output buffer 776 may transmit the stored data associated with the at least one ray to one IST unit among the at least one IST unit based on the FIFO principle.

Since the technical disclosure of FIGS. 1 through 9 may be applied here, a further detailed description is omitted herein for conciseness and simplicity.

FIG. 11 illustrates an example of a ray tracing method.

In operation 1110, the ray generating unit 210 may generate a ray. The generated ray may be input in the ray tracing unit 220.

In operation 1120, at least one TRV unit may each traverse an AS. Here, the AS may correspond to a tree AS. Operation 1110 may include operations 1010 through 1076 of FIG. 10.

In operation 1130, at least one IST unit may each test for an intersection between a scene object and the ray using the AS.

In operation 1140, the shading unit 114 may calculate a color of a pixel corresponding to the ray. The shading unit 1140 may calculate a color of a predetermined pixel in a 2D screen based on a color of a visible scene object intersecting the ray.

Operations 1110, 1120, 1130, and 1140 may perform the ray generation 150, the AS TRV 155, the IST 160, and the shading 165 of FIG. 1, respectively.

Since the technical disclosure of FIGS. 1 through 10 may be applied here, a further detailed description is omitted herein for conciseness and simplicity.

According to exemplary embodiments, ray tracing performance of a GPU may be improved. Due to the use of a sub-pipeline unit only being required for ray TRV based on a state of a ray, power consumption may be reduced. Since rays are issued to a plurality of sub-pipeline units simultaneously, parallel processing efficiency may be improved relative to other methods (e.g., ray TRV using a single pipeline).

The apparatus and methods used to perform ray tracing according to the above-described exemplary embodiments may use one or more processors, which may include a graphical processing unit (GPU), microprocessor, central processing unit (CPU), digital signal processor (DSP), or application-specific integrated circuit (ASIC), as well as portions or combinations of these and other processing devices.

The terms "module", and "unit," as used herein, may refer to, but are not limited to, a software or hardware component or device, such as a Field Programmable Gate Array (FPGA) or Application Specific Integrated Circuit (ASIC), which performs certain tasks. A module or unit may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

The methods according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard discs, floppy discs, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa. The program instructions may be executed by one or more processors. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA).

Although embodiments have been shown and described, it will be apparent to those skilled in the art that various modifications and variation can be made in the present invention without departing from the scope of the invention. For example, suitable results may be achieved if the described techniques are performed in a different order and/or if components in a described system, architecture, device, or circuit are combined in a different manner and/or replaced or supplemented by other components or their equivalents.

Accordingly, it is intended that the present invention cover the modifications and variations of this invention provided they come within the scope of the appended claims and their equivalents.

## Claims

1. A traversal, TRV, unit (155, 240, 700) for ray tracing using a tree acceleration structure, AS, the TRV unit comprising:
a plurality of sub-pipeline units (732, 734, 736) to operate in parallel and to perform different operations required for ray TRV using the tree AS,
a first cross bar (710) to distribute data associated with an input ray to a sub-pipeline unit corresponding to a state of the input ray among the plurality of sub-pipeline units (732, 734, 736); and
a second cross bar (760) to re-transmit data associated with a ray output from one sub-pipeline unit among the plurality of sub-pipeline units (732, 734, 736) to the first cross bar (710), or to a shading unit (165, 290) or to an intersection test, IST, unit (160, 260), based on a state of the ray,
wherein the plurality of sub-pipeline units (732, 734, 736) is connected to a feedback line through the first cross bar (710) and the second cross bar (760), and
wherein the different operations comprise fetching (1032) data associated with a node of the tree AS, testing (1034) an intersection between the ray and a space of the node, and executing (1036) a stack operation for the data.

2. The TRV unit of claim 1, wherein the plurality of sub-pipeline units (732, 734, 736) is adapted to perform different operations on different rays in parallel.

3. The TRV unit of claim 1 or 2, wherein the plurality of sub-pipeline units (732, 734, 736) comprises:
a first sub-pipeline unit (732) to fetch the data associated with the node of the tree AS visited by the ray;
a second sub-pipeline unit (734) to test the intersection between the ray and the space of the node using data associated with the ray and the data associated with the node; and
a third sub-pipeline unit (736) to execute the stack operation for the data associated with the node;
wherein optionally at least one of the first sub-pipeline unit (732), the second sub-pipeline unit (734), and the third sub-pipeline unit (736) is plural.

4. The TRV unit of claim 3, wherein a number of the first sub-pipeline units (732), a number of the second sub-pipeline units (734), and a number of the third sub-pipeline units (736) are determined based on a number of times that use of the first sub-pipeline unit (732), the second sub-pipeline unit (734), and the third sub-pipeline unit (736) is required for the TRV unit to perform TRV for the rays.

5. The TRV unit of claim 3 or 4, further comprising:
a cache (740) to provide (1040) the data associated with the node to the first sub-pipeline unit (732).

6. The TRV unit of one of claims 1 to 5, further comprising:
a plurality of input buffers (722, 724, 726) to store data associated with at least one ray distributed to one sub-pipeline unit among the plurality of sub-pipeline units (732, 734, 736).

7. The TRV unit of claim 5 or 6, further comprising:
a first output buffer (774) to store data associated with at least one ray being output from the second cross bar (760) and transmitted to the shading unit (165, 290); and
a second output buffer (776) to store data associated with at least one ray being output from the second cross bar (760) and transmitted to the IST unit (160, 260).

8. A traversal, TRV, method for ray tracing using a tree acceleration structure, AS, the method comprising:
fetching (1032), by a first sub-pipeline unit (732), data associated with a node of the tree AS visited by a ray;
testing (1034), by a second sub-pipeline unit (734), an intersection between the ray and a space of the node using data associated with the ray and the data associated with the node;
executing (1036), by a third sub-pipeline unit (736), a stack operation for the data associated with the node;
distributing (1010), by a first cross bar (710), data associated with an input ray to a sub-pipeline unit corresponding to a state of the input ray among the first sub-pipeline unit (732), the second sub-pipeline unit (734), and the third sub-pipeline unit (736); and
re-transmitting (1060), by a second cross bar (760) and a feedback line, data associated with a ray output from one sub-pipeline unit among the first sub-pipeline unit (732), the second sub-pipeline unit (734), and the third sub-pipeline unit (736), to the first cross bar (710) or to a shading unit (165, 290) or to an intersection test, IST, unit (160, 260), based on a state of the ray,
wherein the fetching (1032), the testing (1034), and the executing (1036) are performed in parallel.

9. The TRV method of claim 8, wherein at least one of the first sub-pipeline unit (732), the second sub-pipeline unit (734), and the third sub-pipeline unit (736) is plural.

10. The TRV method of claim 8 or 9, further comprising:
providing (1040), by a cache (740), the data associated with the node to the first sub-pipeline unit (732).

11. The TRV method of one of claims 8 to 10, wherein a number of the first sub-pipeline units (732), a number of the second sub-pipeline units (734), and a number of the third sub-pipeline units (736) are determined based on a number of times that use of the first sub-pipeline unit (732), the second sub-pipeline unit (734), and the third sub-pipeline unit (736) is required for a TRV unit to perform TRV for the rays.

12. The TRV method of one of claims 8 to 11, further comprising:
storing (1074), by a first output buffer (774), data associated with at least one ray being output from the second cross bar (760) and transmitted to the shading unit (165, 290); and
storing (1076), by a second output buffer (776), data associated with at least one ray being output from the second cross bar (760) and transmitted to the IST unit (160, 260).

13. A ray tracing unit to perform ray tracing, the ray tracing unit comprising:
a plurality of traversal units (155, 240) according to one of claims 1 to 7; and
a plurality of intersection test units (160, 260) to test an intersection between a ray output from at least one of the plurality of traversal units (155, 240) and a scene object corresponding to a leaf node of a tree acceleration structure.

14. The ray tracing unit of claim 13, further comprising:
a ray dispatch unit (230) to distribute an input ray to at least one traversal unit (240);
a ray mediation unit (250) to mediate ray transmission between the plurality of ray traversal units (240) and the plurality of intersection test units (260) by controlling a ray data flow; and
a buffer (270) to store at least one ray upon completion of a traversal by at least one traversal unit (240).

15. The ray tracing unit of claim 14, further comprising:
a ray generation unit (210) to generate a ray and provide data of the generated ray to the ray dispatch unit (230); and
a shading unit (290) to receive a traced ray from the buffer (270) and to shade the traced ray using data of the traced ray.

## Patentansprüche

1. Eine Traversierungseinheit, TRV, (155, 240, 700) für Raytracing mit Hilfe einer Baumbeschleunigungsstruktur, AS, wobei die TRV-Einheit umfasst:
eine Vielzahl von Unterpipeline-Einheiten (732, 734, 736), um parallel zu arbeiten und verschiedene Rechenoperationen durchzuführen, die für Strahlen-TRV mit Hilfe der Baum-AS benötigt werden,
eine erste Kreuzschiene (710), um Daten, die zu einem Eingangsstrahl gehören, entsprechend einem Status des Eingangsstrahls an eine Unterpipeline-Einheit aus der Vielzahl von Unterpipeline-Einheiten (732, 734, 736) zu verteilen; und
eine zweite Kreuzschiene (760), um Daten, die zu einem Strahl gehören, der von einer Unterpipeline-Einheit aus der Vielzahl von Unterpipeline-Einheiten (732, 734, 736) ausgegeben wird, auf der Grundlage eines Status des Strahls an die erste Kreuzschiene (710) oder an eine Schattierungseinheit (165, 290) oder an eine Schnittpunkt-Test, IST, Einheit (160, 260) weiterzusenden,
wobei die Vielzahl von Unterpipeline-Einheiten (732, 734, 736) mit einer Feedbackleitung über die erste Kreuzschiene (710) und die zweite Kreuzschiene (760) verbunden ist, und
wobei die verschiedenen Rechenoperationen das Abrufen (1032) von Daten, die zu einem Knoten der Baum-AS gehören, das Testen (1034) eines Schnittpunkts zwischen dem Strahl und einem Raum des Knotens und das Durchführen (1036) einer Stapeloperation für die Daten umfassen.

2. Die TRV- Einheit nach Anspruch 1, wobei die Vielzahl von Unterpipeline-Einheiten (732, 734, 736) dazu ausgebildet ist, verschiedene Rechenoperationen für verschiedene Strahlen parallel durchzuführen.

3. Die TRV-Einheit nach Anspruch 1 oder 2, wobei die Vielzahl von Unterpipeline-Einheiten (732, 734, 736) umfasst:
eine erste Unterpipeline-Einheit (732), um die Daten, die zu dem Knoten der Baum-AS gehören, der von dem Strahl besucht wird, abzurufen;
eine zweite Unterpipeline-Einheit (734), um den Schnittpunkt zwischen dem Strahl und dem Raum des Knotens unter Verwendung von Daten, die zu dem Strahl gehören, und der Daten, die zu dem Knoten gehören, zu testen; und
eine dritte Unterpipeline-Einheit (736), um die Stapeloperation für die Daten, die zu dem Knoten gehören, durchzuführen;
wobei wahlweise wenigstens eine der ersten Unterpipeline-Einheit (732), der zweiten Unterpipeline-Einheit (734) und der dritten Unterpipeline-Einheit (736) mehrfach vorliegt.

4. Die TRV-Einheit nach Anspruch 3, wobei eine Anzahl der ersten Unterpipeline-Einheiten (732), eine Anzahl der zweiten Unterpipeline-Einheiten (734) und eine Anzahl der dritten Unterpipeline-Einheiten (736) auf der Basis einer Anzahl, wie oft die Verwendung der ersten Unterpipeline-Einheit (732), der zweiten Unterpipeline-Einheit (734) und der dritten Unterpipeline-Einheit (736) durch die TRV-Einheit zum Durchführen von TRV für die Strahlen erforderlich ist, bestimmt werden.

5. Die TRV-Einheit nach Anspruch 3 oder 4, ferner umfassend:
einen Cachespeicher (740), um die Daten, die zu dem Knoten gehören, der ersten Unterpipeline-Einheit (732) zur Verfügung zu stellen (1040).

6. Die TRV-Einheit nach einem der Ansprüche 1 bis 5, ferner umfassend:
eine Vielzahl von Eingangspuffern (722, 724, 726), um Daten, die zu wenigstens einem Strahl gehören, der an eine Unterpipeline-Einheit aus der Vielzahl von Unterpipeline-Einheiten (732, 734, 736) verteilt wird, zu speichern.

7. Die TRV-Einheit nach Anspruch 5 oder 6, ferner umfassend:
einen ersten Ausgangspuffer (774), um Daten, die zu wenigstens einem Strahl gehören, der von der zweiten Kreuzschiene (760) ausgegeben wird und an die Schattierungseinheit (165, 290) gesendet wird, zu speichern; und
einen zweiten Ausgangspuffer (776), um Daten, die zu wenigstens einem Strahl gehören, der von der zweiten Kreuzschiene (760) ausgegeben wird und an die IST-Einheit (160, 260) gesendet wird, zu speichern.

8. Ein Traversierungsverfahren, TRV, für Raytracing mit Hilfe einer Baumbeschleunigungsstruktur, AS, wobei das Verfahren umfasst:
Abrufen (1032) von Daten, die zu einem Knoten der Baum-AS gehören, der von einem Strahl besucht wird, durch eine erste Unterpipeline-Einheit (732);
Testen (1034) eines Schnittpunkts zwischen dem Strahl und einem Raum des Knotens unter Verwendung von Daten, die zu dem Strahl gehören, und der Daten, die zu dem Knoten gehören, durch eine zweite Unterpipeline-Einheit (734);
Durchführen (1036) einer Stapeloperation für die Daten, die zu dem Knoten gehören, durch eine dritte Unterpipeline-Einheit (736);
Verteilen (1010) von Daten, die zu einem Eingangsstrahl gehören, entsprechend einem Status des Eingangsstrahls an eine Unterpipeline-Einheit aus der ersten Unterpipeline-Einheit (732), der zweiten Unterpipeline-Einheit (734) und der dritten Unterpipeline-Einheit (736) durch eine erste Kreuzschiene (710); und
Weitersenden (1060) von Daten, die zu einem Strahl gehören, der von einer Unterpipeline-Einheit aus der ersten Unterpipeline-Einheit (732), der zweiten Unterpipeline-Einheit (734) und der dritten Unterpipeline-Einheit (736) ausgegeben wird, durch eine zweite Kreuzschiene (760) und eine Feedbackleitung an die erste Kreuzschiene (710) oder an eine Schattierungseinheit (165, 290) oder an eine Schnittpunkt-Test, IST, Einheit (160, 260) auf der Grundlage eines Status des Strahls,
wobei das Abrufen (1032), das Testen (1034) und das Durchführen (1036) parallel durchgeführt werden.

9. Das TRV-Verfahren nach Anspruch 8, wobei wenigstens eine der ersten Unterpipeline-Einheit (732), der zweiten Unterpipeline-Einheit (734) und der dritten Unterpipeline-Einheit (736) mehrfach vorliegt.

10. Das TRV-Verfahren nach Anspruch 8 oder 9, ferner umfassend:
Bereitstellen (1040) der Daten, die zu dem Knoten gehören, an die erste Unterpipeline-Einheit (732) durch einen Cachespeicher (740).

11. Das TRV-Verfahren nach einem der Ansprüche 8 bis 10, wobei eine Anzahl der ersten Unterpipeline-Einheiten (732), eine Anzahl der zweiten Unterpipeline-Einheiten (734) und eine Anzahl der dritten Unterpipeline-Einheiten (736) auf der Basis einer Anzahl, wie oft die Verwendung der ersten Unterpipeline-Einheit (732), der zweiten Unterpipeline-Einheit (734) und der dritten Unterpipeline-Einheit (736) durch eine TRV-Einheit zum Durchführen von TRV für die Strahlen erforderlich ist, bestimmt werden.

12. Das TRV-Verfahren nach einem der Ansprüche 8 bis 11, ferner umfassend:
Speichern (1074) von Daten, die zu wenigstens einem Strahl gehören, der von der zweiten Kreuzschiene (760) ausgegeben wird und an die Schattierungseinheit (165, 290) gesendet wird, durch einen ersten Ausgangspuffer (774); und
Speichern (1076) von Daten, die zu wenigstens einem Strahl gehören, der von der zweiten Kreuzschiene (760) ausgegeben wird und an die IST-Einheit (160, 260) gesendet wird, durch einen zweiten Ausgangspuffer (776).

13. Eine Raytracing-Einheit zum Durchführen von Raytracing, wobei die Raytracing-Einheit umfasst:
eine Vielzahl von Traversierungseinheiten (155, 240) nach einem der Ansprüche 1 bis 7; und
eine Vielzahl von Schnittpunkt-Test-Einheiten (160, 260), um einen Schnittpunkt zwischen einem Strahl, der von wenigstens einer aus der Vielzahl von Traversierungseinheiten (155, 240) ausgegeben wird, und einem Szenenobjekt, das einem Blattknoten einer Baumbeschleunigungsstruktur entspricht, zu testen.

14. Die Raytracing-Einheit nach Anspruch 13, ferner umfassend:
eine Strahlausgabeeinheit (230), um einen Eingangsstrahl an mindestens eine Traversierungseinheit (240) zu verteilen;
eine Strahlvermittlungseinheit (250), um eine Strahlübermittlung zwischen der Vielzahl von Strahltraversierungseinheiten (240) und der Vielzahl von Schnittpunkt-Test-Einheiten (260) durch Steuern eines Strahldatenflusses zu vermitteln; und
einen Puffer (270), um mindestens einen Strahl nach Beendigung einer Traversierung durch mindestens eine Traversierungseinheit (240) zu speichern.

15. Die Raytracing-Einheit nach Anspruch 14, ferner umfassend:
eine Strahlerzeugungseinheit (210), um einen Strahl zu erzeugen und Daten des erzeugten Strahls an die Strahlausgabeeinheit (230) zu liefern; und
eine Schattierungseinheit (290), um einen trassierten Strahl von dem Puffer (270) zu empfangen und den trassierten Strahl mit Hilfe von Daten des trassierten Strahls abzuschattieren.

## Revendications

1. Une unité de parcours, TRV, (155, 240, 700) pour le lancer de rayons en utilisant une structure d'accélération, AS, d'arbre, l'unité de TRV comprenant:
une pluralité d'unités de sous-pipeline (732, 734, 736) pour fonctionner en parallèle et pour effectuer différentes opérations nécessaires pour le TRV de rayons en utilisant l'AS d'arbre,
une première matrice de commutation (710) pour distribuer des données associées à un rayon d'entrée à une unité de sous-pipeline parmi la pluralité d'unités de sous-pipelines (732, 734, 736) conformément à un état du rayon d'entrée; et
une seconde matrice de commutation (760) pour retransmettre des données associées à un rayon fourni par une unité de sous-pipeline parmi la pluralité d'unités de sous-pipeline (732, 734, 736) à la première matrice de commutation (710) ou à une unité d'ombrage (165, 290) ou à une unité de test d'intersection, IST, (160, 260), sur la base d'un état du rayon,
dans laquelle la pluralité d'unités de sous-pipeline (732, 734, 736) est connectée à une ligne de réaction par l'intermédiaire de la première matrice de commutation (710) et de la seconde matrice de commutation (760), et
dans laquelle les différentes opérations comprennent l'extraction (1032) des données associées à un noeud de l'AS d'arbre, le test (1034) d'une intersection entre le rayon et un espace du noeud et l'exécution (1036) d'une opération de pile pour les données.

2. Unité de TRV selon la revendication 1, dans laquelle la pluralité d'unités de sous-pipeline (732, 734, 736) est adaptée pour effectuer différentes opérations pour différents rayons en parallèle.

3. Unité de TRV selon la revendication 1 ou 2, dans laquelle la pluralité d'unités de sous-pipeline (732, 734, 736) comprend:
une première unité de sous-pipeline (732) pour extraire les données associées au noeud de l'AS d'arbre visité par le rayon;
une seconde unité de sous-pipeline (734) pour tester l'intersection entre le rayon et l'espace du noeud en utilisant des données associées au rayon et les données associées au noeud; et
une troisième unité de sous-pipeline (736) pour exécuter l'opération de pile pour les données associées au noeud;
dans laquelle au moins une de la première unité de sous-pipeline (732), la seconde unité de sous-pipeline (734) et la troisième unité de sous-pipeline (736) est facultativement plurielle.

4. Unité de TRV selon la revendication 3, dans laquelle un nombre de premières unités de sous-pipeline (732), un nombre de secondes unités de sous-pipeline (734), et un nombre de troisièmes unités de sous-pipeline (736) sont déterminés en fonction d'un nombre de fois que l'utilisation de la première unité de sous-pipeline (732), de la seconde unité de sous-pipeline (734), et de la troisième unité de sous-pipeline (736) est nécessaire à l'unité de TRV pour effectuer TRV pour les rayons.

5. Unité de TRV selon la revendication 3 ou 4, comprenant en outre:
une antémémoire (740) pour fournir (1040) les données associées au noeud à la première unité de sous-pipeline (732).

6. Unité de TRV selon l'une quelconque des revendications 1 à 5, comprenant en outre:
une pluralité de tampons d'entrée (722, 724, 726) pour stocker des données associées à au moins un rayon distribué à une unité de sous-pipeline parmi la pluralité d'unités de sous-pipeline (732, 734, 736).

7. Unité de TRV selon la revendication 5 ou 6, comprenant en outre:
un premier tampon de sortie (774) pour stocker des données associées à au moins un rayon étant fourni par la seconde matrice de commutation (760) et transmis à l'unité d'ombrage (165, 290); et
un second tampon de sortie (776) pour stocker des données associées à au moins un rayon étant fourni par la seconde matrice de commutation (760) et transmis à l'unité d'IST (160, 260).

8. Procédé de parcours, TRV, pour le lancer de rayons en utilisant une structure d'accélération, AS, d'arbre, le procédé comprenant:
extraire (1032), par une première unité de sous-pipeline (732), des données associées à un noeud de l'AS d'arbre visité par un rayon;
tester (1034), par une seconde unité de sous-pipeline (734), une intersection entre le rayon et un espace du noeud en utilisant des données associées au rayon et les données associées au noeud;
effectuer (1036), par une troisième unité de sous-pipeline (736), une opération de pile pour les données associées au noeud,
distribuer (1010), par une première matrice de commutation (710), des données associées à un rayon d'entrée à une unité de sous-pipeline parmi la première unité de sous-pipeline (732), la seconde unité de sous-pipeline (734) et la troisième unité de sous-pipeline (736) conformément à un état du rayon d'entrée; et
retransmettre (1060), par une seconde matrice de commutation (760) et une ligne de réaction, des données associées à un rayon fourni par une unité de sous-pipeline parmi la première unité de sous-pipeline (732), la seconde unité de sous-pipeline (734) et la troisième unité de sous-pipeline (736) à la première matrice de commutation (710) ou à une unité d'ombrage (165, 290) ou à une unité d'un test d'intersection, IST, (160, 260), sur la base d'un état du rayon,
dans lequel l'extraction (1032), le test (1034) et l'exécution (1036) sont effectués en parallèle.

9. Procédé de TRV selon la revendication 8, dans lequel au moins une de la première unité de sous-pipeline (732), la seconde unité de sous-pipeline (734) et la troisième unité de sous-pipeline (736) est plurielle.

10. Procédé de TRV selon la revendication 8 ou 9, comprenant en outre:
fournir (1040), par une antémémoire (740), les données associées au noeud à la première unité de sous-pipeline (732).

11. Procédé de TRV selon l'une quelconque des revendications 8 à 10, dans lequel un nombre de premières unités de sous-pipeline (732), un nombre de secondes unités de sous-pipeline (734), et un nombre de troisièmes unités de sous-pipeline (736) sont déterminés en fonction d'un nombre de fois que l'utilisation de la première unité de sous-pipeline (732), de la seconde unité de sous-pipeline (734), et de la troisième unité de sous-pipeline (736) est nécessaire à une unité de TRV pour effectuer TRV pour les rayons.

12. Procédé de TRV selon l'une quelconque des revendications 8 à 11, comprenant en outre:
stocker (1074), par un premier tampon de sortie (774), des données associées à au moins un rayon étant fourni par la seconde matrice de commutation (760) et transmis à l'unité d'ombrage (165, 290); et
stocker (1076), par un second tampon de sortie (776), des données associées à au moins un rayon étant fourni par la seconde matrice de commutation (760) et transmis à l'unité d'IST (160, 260).

13. Une unité de traçage de rayons pour effectuer le lancer de rayons, l'unité de traçage de rayons comprenant:
une pluralité d'unités de parcours (155, 240) selon l'une quelconque des revendications 1 à 7; et
une pluralité d'unités de test d'intersection (160, 260) pour tester une intersection entre un rayon fourni par au moins une de la pluralité d'unités de parcours (155, 240) et un objet de scène qui correspond à un noeud feuille d'une structure d'accélération d'arbre.

14. Unité de traçage de rayons selon la revendication 13, comprenant en outre:
une unité de distribution de rayons (230) pour distribuer un rayon d'entrée à au moins une unité de parcours (240);
une unité de commutation de rayons (250) pour relayer des rayons entre la pluralité d'unités de parcours de rayons (240) et la pluralité d'unités de test d'intersection (260) en contrôlant un flux de données de rayon; et
un tampon (270) pour stocker au moins un rayon à l'achèvement d'un parcours par au moins une unité de parcours (240).

15. Unité de traçage de rayons selon la revendication 14, comprenant en outre:
une unité de génération de rayons (210) pour générer un rayon et pour fournir des données du rayon généré à l'unité de distribution de rayons (230); et
une unité d'ombrage (290) pour recevoir un rayon tracé à partir du tampon (270) et pour ombrer le rayon tracé en utilisant des données du rayon tracé.
